# EUROPÄISCHE PATENTSCHRIFT

(11) **EP 3 667 129 B1**
(45) Veröffentlichungstag und Bekanntmachung des Hinweises auf die Patenterteilung: **27.03.2024**
(21) Anmeldenummer: 19216284.0
(22) Anmeldetag: 13.12.2019
(51) Int. Cl.: F16H 63/34

(54) **VERRIEGELUNGSEINHEIT MIT ROHRSTÜCK**
LOCKING UNIT WITH A PIPE FITTING
UNITÉ DE VERROUILLAGE POURVU DE PIÈCE TUBULAIRE

(30) Priorität: 14.12.2018 DE 102018132354; 29.05.2019 DE 102019114450
(43) Veröffentlichungstag der Anmeldung: 17.06.2020
(73) Patentinhaber: SVM Schultz Verwaltungs-GmbH & Co. KG, 87700 Memmingen (DE)
(72) Erfinder: Mang, Helmut, 87700 Memmingen (DE); Hölzle, Florian, 89257 Illertissen (DE); Kächler, Martin, 87700 Memmingen (DE); Schütz, Wolfgang, 87700 Memmingen (DE)
(74) Vertreter: Patentanwälte Olbricht, Buchhold, Keulertz Partnerschaft mbB

(56) Entgegenhaltungen:
- EP-A1- 2 458 226
- DE-A1-102017 127 212
- KR-B1- 100 994 104
- US-A1- 2006 266 032
- US-A1- 2015 159 752
- US-A1- 2016 244 031
- US-A1- 2018 224 022

## Beschreibung

Die Erfindung betrifft eine Verriegelungseinheit, insbesondere für die Parksperre eines Automatikgetriebes, für das Verriegeln der Bewegung eines von einem Antrieb bewegbaren, insbesondere mit Druck bzw. hydraulischen Druck beaufschlagbaren Kolbens, gemäß anspruch 1. Wobei die Verriegelungseinheit einen Elektromagneten und mindestens ein Rastelement aufweist und das Rastelement mit dem Anker beziehungsweise der Ankerstange des Elektromagneten zusammenwirkt und der Kolben mindestens eine Rastaufnahme aufweist und der Kolben durch das haltende Zusammenwirken des Rastelementes mit der Rastaufnahme festlegbar ist.

Eine Verriegelungseinheit ist zum Beispiel aus der Internationalen Patentanmeldung WO 2013/131926 der Anmelderin bekannt.

Aus der EP 2 458 226 A1 ist eine Verriegelungsvorrichtung offenbart, bei der ein Sperrkolben hydraulisch verstellt und mittels Kugeln elektromagnetisch gesperrt werden kann.

Aus der US 2016/244031 A1 ist Parkvorrichtung bekannt, die einen hydraulisch verstellbaren Kolben umfasst, welcher elektromagnetisch gesperrt werden kann. Der Kolben ist in einem Gehäuse angeordnet, wobei das Gehäuse einen Fluidkanal ausbildet, der innenradial von einem Gehäuseteil und außenradial von einem weiteren Gehäuseteil begrenzt ist.

Aus der US 2015/159752 A1 ist eine Vorrichtung zur Betätigung eines Mechanismus zur Verriegelung bekannt. Ein Kolben ist hydraulisch verstellbar und mittels Kogeln in einer Stellung verrastbar.

Aus der KR 100 994 104 B1 ist eine Verriegelungseinheit, bei der ein hydraulisch verstellbarer Kolben mittels Kugeln verriegelbar ist.

Aus der US 2018/224022 A1 ist ein elektromagnetisch verstellbares Schieberventil bekannt. Das Ventilgehäuse kann aus Kunststoff ausgebildet sein.

Aus der DE 10 2017 127212 A1 ist eine mechanisch betätigte Parksperre bekannt.

Aus der US 2006/266032 A1 ist ein hydraulischer Geberzylinder einer Kupplung bekannt. Der Geberzylinder umfasst einen Kolben, der in einer metallenen Laufbuchse geführt ist.

Es ist eine Aufgabe der Erfindung, eine bekannte Verriegelungseinheit alternativ oder besser auszuführen. Dies wird erfindungsgemäß durch eine Verriegelungseinheit gemäß Anspruch 1 erreicht. Vorteilhafte Ausführungen können beispielsweise den Unteransprüchen entnommen werden.

Die Erfindung betrifft eine Verriegelungseinheit, insbesondere für die Parksperre eines Automatikgetriebes, für das Verriegeln der Bewegung eines von einem Antrieb bewegbaren, insbesondere mit Druck bzw. hydraulischen Druck beaufschlagbaren Kolbens, wobei die Verriegelungseinheit einen Elektromagneten und mindestens ein Rastelement aufweist und das Rastelement mit dem Anker beziehungsweise der Ankerstange des Elektromagneten zusammenwirkt und der Kolben mindestens eine Rastaufnahme aufweist und der Kolben durch das haltende Zusammenwirken des Rastelementes mit der Rastaufnahme festlegbar ist.

Erfindungsgemäß weist die Verriegelungseinheit ein innenliegendes Rohrstück auf, welches als Führung des Kolbens ausgebildet ist.

Das innenliegende Rohrstück kann allgemein als Teil der Verriegelungseinheit oder als Teil des Gehäuses betrachtet werden.

Durch die Führung am Rohrstück wird eine besonders gute Führung des Kolbens erreicht, so dass dieser möglichst leichtgängig bewegt werden kann.

Erfindungsgemäß ist vorgesehen, dass der Kolben zumindest teilweise in einem Gehäuse gelagert oder angeordnet ist.

Gemäß der Erfindung ist vorgesehen, dass das Gehäuse zumindest teilweise, vorzugsweise vollständig aus Kunststoff gebildet ist. Dies hat sich als vorteilhaft erwiesen, insbesondere wegen der leichten Bearbeitbarkeit und des geringen Gewichts. Auch andere Materialen sind jedoch möglich.

Außenseitig zu dem Rohrstück ist ein Druckleitungskanal ausgebildet. In diesen kann ein unter Druck stehendes Medium einströmen, um den Kolben zu betätigen. Beispielsweise durch eine weiter unten beschriebene Dichtigkeit zwischen Rohrstück und Gehäuse kann das Medium vorteilhaft an eine Position geleitet werden, an welcher es zum Antrieb des Kolbens benötigt wird.

Der Druckleitungskanal ist erfindungsgemäß zumindest teilweise radial, bezogen auf die Längsachse des Kolbens, innen von der Außenseite des Rohrstückes und außen von der Innenwand des Gehäuses begrenzt.

Erfindungsgemäß ist das Rohrstück aus Metall ausgebildet. Dieses Material hat sich als vorteilhaft erwiesen.

Erfindungsgemäß ist vorgesehen, dass der Kolben zumindest teilweise in einem, zumindest teilweise von dem Gehäuse umgebenen Mittelstück gelagert ist.

Das Mittelstück weist an seiner dem Elektromagneten abgewandten und/oder dem Kolbenrohr zugewandten Seite eine umlaufende Anlageschulter auf, an welcher sich ein ring- und/oder konusartiger Verbindungsbereich anschließt.

Erfindungsgemäß ist vorgesehen, dass der Verbindungsbereich das Rohrstück trägt. Dadurch kann das Rohrstück zuverlässig befestigt werden.

Das Rohrstück kann mit dem Gehäuse verbunden sein oder Teil des Gehäuses sein.

Bevorzugt liegt der Kolben am Rohrstück an. Dies erlaubt eine besonders vorteilhafte Führung des Kolbens entlang des Rohrstücks. Das Anliegen kann entlang eines vollständigen Umfangs erfolgen.

Bevorzugt ist vorgesehen, dass der Kolben am Rohrstück entlanggleitet.

Gemäß einer bevorzugten Ausführung liegt der Kolben fluiddicht am Rohrstück an. Dadurch kann der Kolben vorteilhaft durch Druck betätigt werden.

Bevorzugt weist der Kolben ein Dichtmittel auf, welches den Kolben am Rohrstück fluiddicht abdichtet. Dies erlaubt eine besonders dichte Ausführung.

Das Dichtmittel kann beispielsweise ein Dichtring oder ein O-Ring sein. Der Dichtring oder der O-Ring können insbesondere in einem umlaufenden Absatz des Kolbens vorgesehen sein.

Der Dichtring oder der O-Ring sind bevorzugt in einem Kolbendruckstück des Kolbens vorgesehen.

Bevorzugt bildet das Rohrstück innenseitig eine Gehäuseinnenwand, an welcher der Kolben anliegt
Das Rohrstück ist bevorzugt zumindest entlang eines Abschnitts, an welchem der Kolben geführt wird, gerade und/oder zylinderförmig ausgebildet. Dies erlaubt ein vorteilhaftes Zusammenwirken mit dem Kolben.

Das Mittelstück kann insbesondere hülsenartig ausgebildet sein.

Bevorzugt bildet das Mittelstück an einer Innenseite eine Lagerfläche für den Kolben oder ein Kolbendruckstück des Kolbens. Dadurch kann der Kolben vorteilhaft gelagert werden.

Das Mittelstück kann insbesondere als Drehteil oder Sinterformteil ausgebildet sein, in einem formativen Verfahren hergestellt sein oder mittels 3D-Druckens, Metallpulverspritzgießens, selektiven Laserschmelzens oder selektiven Lasersinterns hergestellt sein. Derartige Verfahren haben sich als vorteilhaft erwiesen. Auch andere Verfahren sind jedoch möglich.

Bevorzugt weist das Mittelstück eine axiale Länge von 100 % bis 200 % oder von 130 % bis 170 % eines Hubs des Kolbens auf.

Weiter bevorzugt weist das Mittelstück eine axiale Länge von 30 % bis 40 % einer axialen Länge des Kolbens auf.

Weiter bevorzugt weist das Mittelstück eine axiale Länge von 13 % bis 20 % einer axialen Länge der Verriegelungseinheit auf.

Bevorzugt weist das Mittelstück eine radiale Außenseite auf, welche das Gehäuse trägt. Dies erlaubt eine zuverlässige Verbindung zwischen Gehäuse und Mittelstück.

Das Mittelstück kann insbesondere mit einem Magnetgehäuse des Elektromagneten verbunden sein. Dies erlaubt eine sichere Referenz zwischen den beiden Komponenten.

In dem Verbindungsbereich können insbesondere radial außenseitig eine Anzahl von Segmentzwischenräumen als Einkerbungen ausgebildet sein. Dadurch kann beispielsweise ein Durchgang von Fluid ermöglicht werden.

Die Segmentzwischenräume sind bevorzugt als fluidische Verbindung zwischen Druckleitungskanal und einem Druckraum innerhalb des Rohrstücks ausgebildet. Dies ermöglicht eine Leitung von Druck aus dem Druckleitungskanal in den Druckraum.

Zwischen den Segmentzwischenräumen können jeweilige Auflagesegmente ausgebildet sein, welche das Rohrstück tragen. Dies erlaubt eine sichere Verbindung mit dem Rohrstück. Der Verbindungsbereich kann insbesondere als Kronenring ausgebildet sein.

Gemäß einer bevorzugten Ausführung ist vorgesehen, dass der Kolben vollständig entlang seiner axialen Erstreckung innen hohl ist. Dadurch kann Gewicht eingespart werden.

Insbesondere kann vorgesehen sein, dass der Kolben einen sich axial durch den gesamten Kolben erstreckenden Hohlraum aufweist.

Der Hohlraum ist bevorzugt an beiden axialen Enden offen.

Bevorzugt ist vorgesehen, dass der Hohlraum durchgehend oder abschnittsweise eine Wandung aufweist, welche dünner ist als ein Viertel eines Durchmessers des Kolbens oder dünner ist als ein Zehntel des Durchmessers des Kolbens.

Gemäß einer bevorzugten Ausführung ist vorgesehen, dass der Kolben entlang eines axialen Abschnitts ein vollständig hohles Kolbenrohr sowie entlang eines weiteren axialen Abschnitts ein mit dem Kolbenrohr verbundenes Kolbendruckstück aufweist. Dadurch können Kolbenrohr und Kolbendruckstück separat voneinander entsprechend ihrer jeweiligen Funktionen optimiert werden.

Bevorzugt sind die Rastaufnahmen in dem Kolbendruckstück ausgebildet. Das Kolbendruckstück ist bevorzugt näher am Elektromagneten und massiver als das Kolbenrohr.

Das Kolbenrohr kann insbesondere als Tiefziehteil, aus Werkzeugstahl oder aus Metall ausgebildet ist. Auch andere Ausführungen sind jedoch möglich.

Gemäß einer bevorzugten Ausführung ist vorgesehen, dass das Kolbenrohr eine Wandstärke von 5 % bis 15 % des Durchmessers des Kolbenrohrs aufweist.

Bevorzugt weist das Kolbenrohr ein Rohrmittelstück mit einer außenseitigen Verjüngung auf, wobei die Verjüngung des Kolbenrohrs mit einem im Gehäuse ausgebildeten Absatz zusammenwirkt, um eine Bewegung des Kolbens weg vom Elektromagneten zu begrenzen. Dadurch kann diese Bewegung einfach und zuverlässig begrenzt werden.

Insbesondere kann eine Kolbenfeder zwischen Gehäuse und Kolben vorgesehen sein, welche den Kolben in Richtung auf den Elektromagneten drückt. Dadurch kann der Kolben in eine Ruhelage vorgespannt werden, welche er insbesondere bei Abwesenheit einer aktiven Betätigung, also beispielsweise bei Abwesenheit eines unter Druck stehenden Fluids, und bei fehlender Blockierung einnimmt.

Gemäß einer bevorzugten Ausführung ist vorgesehen, dass der Kolben gegenüberliegend zum Elektromagneten in einem Gleitlager des Gehäuses gelagert ist. Dies ermöglicht eine zuverlässige Führung des Kolbens.

Bevorzugt ist der Druckleitungskanal über einen Anschluss durch das Gehäuse von außen hydraulisch anschließbar. Dies ermöglicht eine Zuführung von unter Druck stehendem Fluid.

Gemäß einer bevorzugten Ausführung ist vorgesehen, dass die Verriegelungseinheit eine Rasteinheit aufweist, welche die Rastelemente trägt.

Die Rasteinheit kann insbesondere einen dem Elektromagneten oder einem Ankerraum des Elektromagneten zugewandten Abschnitt und einen dem Kolben zugewandten Abschnitt aufweisen, welche jeweils hülsenförmig ausgeführt sind.

Bevorzugt ist vorgesehen, dass der dem Elektromagneten zugewandte Abschnitt der Rasteinheit den Anker in zumindest einer Endlage teilweise aufnimmt.

Bevorzugt ist in der Rasteinheit oder im dem Kolben zugewandten Abschnitt der Rasteinheit ein Innenraum ausgebildet, welcher kolbenseitig offen ist.

Zwischen Rasteinheit und Gehäuse oder zwischen Rasteinheit und Mittelstück kann ein Außenraum ausgebildet sein.

Außenraum und Innenraum können insbesondere über eine in der Rasteinheit ausgebildete Ausgleichsöffnung fluidisch verbunden sein. Dies kann einen Druckausgleich ermöglichen.

Bevorzugt ist vorgesehen, dass der Außenraum durch einen Kanal, welcher in oder an dem Mittelstück ausgebildet ist, entlüftet wird. Dadurch kann der Außenraum auf Umgebungsdruck gehalten werden. Mittels der bereits erwähnten Ausgleichsöffnung kann somit auch der Innenraum auf Umgebungsdruck gehalten werden.

Bevorzugt ist die Rasteinheit mit dem Gehäuse direkt oder indirekt fest verbunden. Dies ermöglicht eine gleichbleibende Positionsbeziehung.

In der Rasteinheit kann insbesondere ein Steuerelement angeordnet sein, welches mit der Ankerstange fest verbunden ist. Dieses kann insbesondere zum Betätigen der Rastelemente dienen.

Das Steuerelement ist bevorzugt zumindest teilweise innerhalb des dem Kolben zugewandten Abschnitts beweglich.

Gemäß einer bevorzugten Ausführung ist vorgesehen, dass in der Rasteinheit eine Anzahl von radialen Bohrungen zur Aufnahme der Rastelemente ausgebildet sind. Dadurch können die Rastelemente zuverlässig geführt werden.

Die Rastelemente können insbesondere kugelförmig ausgebildet sein. Auch andere Formen sind jedoch möglich.

Das Steuerelement kann bevorzugt dazu ausgebildet sein, zumindest in einer Stellung die Rastelemente radial nach außen zu drücken. Dadurch können sie eine Blockierwirkung entfalten.

Bevorzugt ist vorgesehen, dass die Rastelemente, wenn sie radial nach außen gedrückt sind, mit einer der Rastaufnahmen in Eingriff kommen. Dadurch können sie eine Bewegung des Kolbens blockieren.

Die Rasteinheit und das Mittelstück können insbesondere einstückig ausgebildet sein. Dies erlaubt eine einfache Herstellung.

Gemäß einer bevorzugten Ausführung ist vorgesehen, dass Mittelstück und Rasteinheit einstückig ausgebildet werden, wobei das Mittelstück in axialer Richtung, bezogen auf die Längsachse des Kolbens, kolbenseitig kürzer ausgeführt ist als die Rasteinheit und insbesondere die radialen Bohrungen der Rasteinheit in radialer Richtung, bezogen auf die Längsachse des Kolbens, nicht von dem Mittelstück verdeckt werden.

Bevorzugt weist der Kolben zumindest zwei axial zueinander beabstandete Rastaufnahmen auf. Dies ermöglicht eine Blockierung des Kolbens in zumindest zwei Positionen. Auch die Verwendung von mehr als zwei Rastaufnahmen ist jedoch möglich.

Weiter bevorzugt ist der Kolben mittels den beiden Rastaufnahmen in zwei unterschiedlichen Positionen verriegelbar. Bei Vorhandensein von mehr als zwei Rastaufnahmen kann dementsprechend auch eine Verriegelungsmöglichkeit in mehr als zwei Positionen möglich sein.

Der Elektromagnet kann insbesondere einen Magnetkern aufweisen, welcher an einem axialen Ende der Verriegelungseinrichtung angeordnet ist.

Die Ankerstange ist bevorzugt in einer Bohrung des Magnetkerns geführt. Dies ermöglicht eine zuverlässige Führung der Ankerstange.

Der Kolben weist bevorzugt einen axial endseitigen Verbindungsbereich auf, welcher auch im vollständig zurückgezogenen Zustand des Kolbens aus dem Gehäuse hervorsteht. Dies ermöglicht einen einfachen Anschluss eines externen Elements an den Kolben.

Der Verbindungsbereich kann insbesondere gabelartig ausgebildet sein. Dies ermöglicht eine vorteilhafte Befestigung typischer externer Elemente. Der Verbindungsbereich kann auch als ausgestanzter Gabelkopf ausgebildet sein.

Gemäß einer bevorzugten Ausführung ist vorgesehen, dass der Kolben oder das Kolbendruckstück zumindest teilweise radial zwischen Rasteinheit und Gehäuse angeordnet ist oder zwischen Rasteinheit und Mittelstück angeordnet ist.

Der Elektromagnet weist bevorzugt eine Wicklung zur Erzeugung eines Magnetfelds zum Bewegen des Ankers und/oder der Ankerstange auf. Dies ermöglicht eine einfache Betätigung.

Rasteinheit und Mittelstück können gemäß einer Ausführung als einstückiges Spritzgussteil oder in einem additiven Fertigungsverfahren einstückig hergestellt oder ausgebildet sein. Damit können auch eine Anzahl von radialen Ausnehmungen, insbesondere Bohrungen, zur Aufnahme der Rastelemente in der Rasteinheit ausgebildet werden.

Mittelstück und Rasteinheit können insbesondere einstückig ausgebildet werden. Das Mittelstück kann in axialer Richtung, bezogen auf die Längsachse des Kolbens, kolbenseitig kürzer ausgeführt sein als die Rasteinheit. Insbesondere kann vorgesehen, sein, dass die radialen Bohrungen der Rasteinheit in radialer Richtung, bezogen auf die Längsachse des Kolbens, nicht von dem Mittelstück verdeckt werden. Dies erlaubt eine Ausbildung der Bohrungen durch Werkzeuge wie Bohrer, welche an dem Mittelstück vorbeigeführt werden können.

Gemäß einer bevorzugten Ausführung ist vorgesehen, dass das innenliegende Rohrstück mit dem Gehäuse fluiddicht verbunden ist.

Durch eine solche fluiddichte Ausführung kann in vorteilhafter Weise erreicht werden, dass eine Leckage zwischen Rohrstück und Gehäuse verhindert wird. Eine solche Leckage könnte beispielsweise zu einem Austreten von unter Druck stehendem Fluid in einen Raum, in welchem es die Bewegung des Kolbens verhindern könnte, führen.

Gemäß einer bevorzugten Ausführung ist vorgesehen, dass das Rohrstück in einer Nut des Gehäuses aufgenommen ist. Dies ermöglicht eine zuverlässige Aufnahme.

Die Nut des Gehäuses kann insbesondere ringförmig ausgebildet sein. Damit kann sie sich vorteilhaft einem zylinderförmigen Rohrstück anpassen.

Gemäß einer bevorzugten Ausführung ist vorgesehen, dass zwischen Gehäuse und Rohrstück eine Dichtung angeordnet ist. Damit kann eine Dichtwirkung vorteilhaft erreicht werden.

Die Dichtung kann insbesondere in der Nut angeordnet sein. Sie kann ein O-Ring oder Dichtring sein. Die Dichtung kann auch ein Dichtmaterial oder ein Silikondichtmaterial sein. Derartige Ausführungen haben sich als vorteilhaft erwiesen.

Gemäß einer bevorzugten Ausführung ist vorgesehen, dass in dem Rohrstück eine Anzahl von Bohrungen ausgebildet sind, in welche Eingriffsteile des Gehäuses eingreifen. Dadurch kann eine vorteilhaft Befestigung und/oder Abdichtung erreicht werden. Die Eingriffsteile können insbesondere stoffschlüssig mit dem Rest des Gehäuses ausgebildet sein. Sie können beispielsweise bei einer Herstellung des Gehäuses durch Umspritzen des Rohrstücks erzeugt werden.

Gemäß einer bevorzugten Ausführung ist vorgesehen, dass das Gehäuse einen insbesondere ringartigen Vorsprung aufweist, welcher das Rohrstück partiell umgreift. Damit kann das Rohrstück vorteilhaft gehalten und auch abgedichtet werden.

Der Vorsprung kann die Nut insbesondere radial innenseitig begrenzen.

Gemäß einer bevorzugten Ausführung ist vorgesehen, dass das Rohrstück mit dem Gehäuse gasdicht und/oder druckdicht verbunden ist. Dadurch kann eine über die Fluiddichtigkeit hinausgehende Dichtigkeit erreicht werden.

Das Gehäuse kann gemäß einer Ausführung das Rohrstück tragen. Dies erlaubt eine exakte Positionsbeziehung zwischen Rohrstück und Gehäuse.

Die Offenbarung betrifft des Weiteren ein Verfahren zur Herstellung einer Verriegelungseinheit gemäß der Erfindung, wobei das Rohrstück bereitgestellt wird und das Gehäuse um das Rohrstück umspritzt wird. Durch ein solches Verfahren kann das Gehäpuse in einfacher Weise hergestellt und mit dem Rohrstück verbunden werden. Bezüglich der Verriegelungseinheit kann auf alle hierin beschriebenen Ausführungen und Varianten zurückgegriffen werden.

In dem Gehäuse kann dabei gemäß einer alternativen Verfahrensführung eine Nut ausgebildet werden, in welche das Rohrstück anschließend eingebracht wird.

In dem Rohrstück kann eine Anzahl von Bohrungen ausgebildet sein, wobei in dem Gehäuse eine Anzahl von Eingriffsteilen ausgebildet sind oder ausgebildet werden, welche jeweils in eine Bohrung eingreifen. Dies erlaubt eine zuverlässige Verbindung. Die Eingriffsteile können dabei insbesondere materialschlüssig mit dem Rest des Gehäuses ausgebildet werden.

Beispielsweise kann vorgesehen sein, dass der Kolben innen hohl ist.

Der Kolben nach dem vorgenannten Stand der Technik ist ein aufwändiges Drehteil, das in einem mehrere verschiedene zerspanende Schritte umfassenden Herstellungsprozess entsteht. Ein wesentlicher Aspekt einer hohlen Ausführung stellt darauf ab, die einzelnen Bauteile in einfachen Herstellungsverfahren zu produzieren. Der vorgeschlagene Kolben kann als Tiefziehteil vorgesehen sein, bei welchem die verhältnismäßig komplexe Kontur dieses Kolbens in einem Bearbeitungsschritt realisiert wird. Neben der deutlich günstigeren Herstellung kann gleichzeitig die Masse eines solchen Kolbens reduziert werden, was insgesamt die Masse der erfindungsgemäß vorgeschlagenen Verriegelungseinheit verringert, was einerseits Ressourcen spart und andererseits auch erlaubt, die einzusetzenden Antriebe bei gleichen dynamischen Eigenschaften kleiner, und so auch kostengünstiger sowie auch leichter zu realisieren.

Es kann gemäß einer Ausführung auch vorgesehen sein, dass der Kolben zumindest teilweise in einem, zumindest teilweise aus Kunststoff gebildeten Gehäuse gelagert ist.

Auch das Gehäuse nach dem vorgenannten Stand der Technik ist ein aufwändiges, zylinderartiges, auf seiner Innenseite hochgenau gefertigtes Drehteil aus Metall.

Das Gehäuse kann bei der hierin vorgeschlagenen Ausführung beispielsweise aus Kunststoff bestehen, wobei der Kunststoff zum Beispiel auf die Konstruktion aufgespritzt wird oder als fertiges Spritzgussbauteil vorgehalten wird, in dem die einzelnen Teile der erfindungsgemäßen Verriegelungseinheit dann eingebaut werden. Der erfindungsgemäße Vorschlag umfasst dabei sowohl eine unmittelbare Lagerung des Kolbens auf dem Kunststoff, wobei dann beispielsweise die Innenseite des Kunststoffgehäuses eine entsprechende verschleißreduzierende Gleitausstattung, wie zum Beispiel eine Gleitbeschichtung oder Ähnliches aufweisen kann, wie auch eine mittelbare Lagerung des Kolbens in dem aus Kunststoff gebildeten Gehäuse. So kann zum Beispiel bei der mittelbaren Lagerung in dem Kunststoffgehäuse eine entsprechende, vorzugsweise aus Metall bestehende Führungshülse oder ein Führungsrohr vorgesehen sein, dessen Innenseite mit der Außenseite des Kolbens zusammenwirkt.

Das als Spritzgussteil oder als Umspritzteil realisierbare Kunststoffgehäuse kann einfacher und damit kostengünstiger herzustellen sein wie die Vorlagen aus dem Stand der Technik. Auch hier beschränkt sich der Vorschlag nicht nur auf die günstigere Herstellungsweise, sondern reduziert wiederum die Masse der gesamten Verriegelungseinheit, da ein leichteres Material für das Gehäuse eingesetzt wird.

Es kann auch vorgesehen sein, dass der Kolben zumindest teilweise in einem, zumindest teilweise von einem Gehäuse umgebenen Mittelstück gelagert ist.

Diese Variante hat den Vorteil, dass der Kolben zunächst nur an dem Mittelstück geführt ist. Auf eine Führung im Gehäuse kann dabei verzichtet werden, sie kann jedoch auch zusätzlich vorgesehen sein. Das Gehäuse kann nach diesem Vorschlag ein von dem Mittelstück getrenntes Bauteil sein und kann dann, da es beispielsweise nicht mehr primär die Aufgabe der Lagerung des Kolbens hat, nach anderen Gesichtspunkten optimiert werden. Da das Gehäuse verhältnismäßig großvolumig ist, kann dieses dann aus einem leichteren Material (z.B. Kunststoff) gefertigt werden, als das Material des Mittelstückes, das die lagernden Aufgaben übernimmt und somit bevorzugt zum Beispiel aus entsprechendem metallischen Lagermaterial besteht.

In einer bevorzugten Ausgestaltung des Vorschlags ist vorgesehen, dass der Kolben zweigeteilt ist und ein hohles, zum Beispiel tiefgezogenes Kolbenrohr und ein zum Beispiel als Drehteil ausgebildetes Kolbendruckstück aufweist.

In einer bevorzugten Ausgestaltung des Vorschlags ist vorgesehen, dass der Kolben, insbesondere das Kolbenrohr an seinem außenliegenden Ende gabelartig ausgebildet ist.

In einer bevorzugten Ausgestaltung des Vorschlags ist vorgesehen, dass der Kolben, bevorzugt das Kolbendruckstück zwei axial zueinander versetzte Rastaufnahmen aufweist.

In einer bevorzugten Ausgestaltung des Vorschlags ist vorgesehen, dass zumindest ein Teil des Kolbens, bevorzugt der gesamte Kolben als Tiefziehteil ausgebildet ist.

In einer bevorzugten Ausgestaltung des Vorschlags ist vorgesehen, dass das aus Kunststoff gefertigte Gehäuse ein Hülsen- oder Rohrstück umfasst bzw. umschließt.

In einer bevorzugten Ausgestaltung des Vorschlags ist vorgesehen, dass die Außenseite des Rohrstückes einen Druckleitungskanal begrenzt.

In einer bevorzugten Ausgestaltung des Vorschlags ist vorgesehen, dass das Hülsen- oder Rohrstück auf einem Mittelstück aufgesetzt oder aufgepresst ist.

In einer bevorzugten Ausgestaltung des Vorschlags ist vorgesehen, dass die Innenseite des Hülsen- oder Rohrstückes eine Lagerung für den Kolben bzw. das Kolbenrohr bildet.

In einer bevorzugten Ausgestaltung des Vorschlags ist vorgesehen, dass an dem Mittelstück, bevorzugt auf der dem Elektromagneten zugewandten Seite ein Entlüftungskanal vorgesehen ist.

In einer bevorzugten Ausgestaltung des Vorschlags ist vorgesehen, dass sich die Kolbenfeder innerhalb oder außerhalb des Mittelteiles befindet.

In einer bevorzugten Ausgestaltung des Vorschlags ist vorgesehen, dass das Mittelstück als ein Sinterformteil ausgebildet ist oder in einem formativen Verfahren gefertigt ist, insbesondere mittels 3D-Druckens, Metallpulverspritzgießens, selektiven Laserschmelzens oder selektiven Lasersinterns. Sintern oder formatives Fertigen sind kostengünstige Herstellungsverfahren, mit welchen sich zudem nahezu beliebig ausgeformte Werkstücke in einem einzigen Arbeitsgang herstellen lassen.

In einer bevorzugten Ausgestaltung des Vorschlags ist vorgesehen, dass das Mittelteil eine radiale Ausrichtung der Rasteinheit ermöglicht.

Des Weiteren umfasst die Offenbarung auch die Verwendung der Verriegelungseinheit in einer Parksperre eines Automatikgetriebes. Dies ist aber nicht der einzige Anwendungsfall der vorgeschlagenen Verriegelungseinheit. Sie kann überall dort eingesetzt werden, wo die Stellung eines axial, also parallel zu seiner Längserstreckung bewegten Bauteiles festzulegen, also zu verriegeln ist.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in mehreren Ausführungsbeispielen schematisch dargestellt. Es zeigen:
- Fig. 1a: in einem vertikalen Schnitt ein erstes Ausführungsbeispiel der erfindungsgemäßen Verriegelungseinheit,
- Fig. 1b: einen vergrößerten Ausschnitt im Bereich des Mittelstücks nach Fig. 1a,
- Fig. 2a und 2b: je in einem vertikalen Schnitt ein zweites Ausführungsbeispiel der erfindungsgemäßen Verriegelungseinheit in zwei verschiedenen Stellungen des Kolbens,
- Fig. 3a und 3b: in einer drei-dimensionalen Ansicht (Figur 3b) und in einer vertikalen Schnittansicht (Figur 3a) das Mittelstück nach der erfindungsgemäßen Verriegelungseinheit,
- Fig. 4a bis 4c: mögliche Ausführungen einer fluiddichten Verbindung zwischen Gehäuse und Rohrstück.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

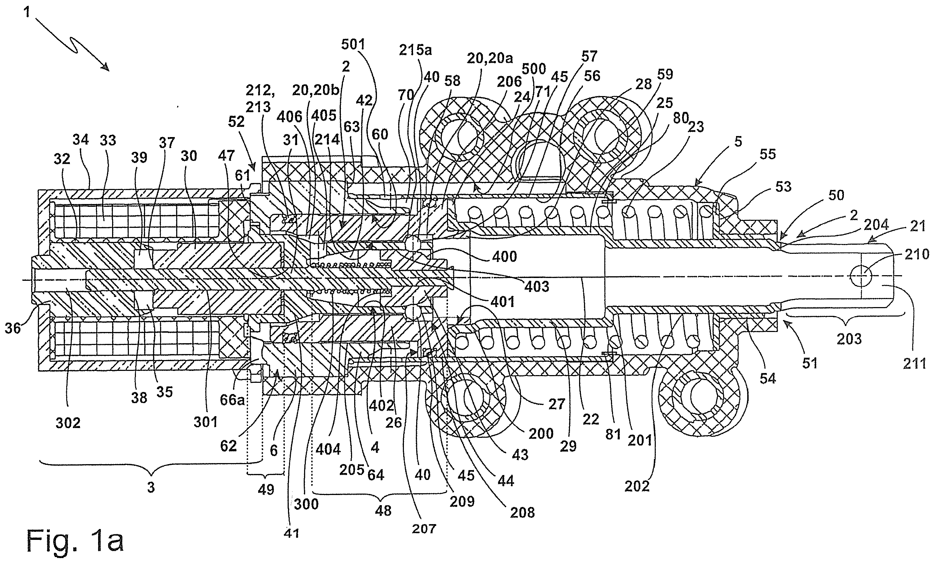

In Figur 1a ist die erfindungsgemäße Verriegelungseinheit 1 in einem ersten Ausführungsbeispiel schematisch gezeigt. Die Verriegelungseinheit 1 besitzt ein Gehäuse 5, an dessen vorderen Gehäuseende 50 eine Öffnung 51 vorgesehen ist, aus der das vordere Ende 21 des Kolbens 2 herausragt.

An dem der Öffnung 51 gegenüberliegenden Gehäuseende 52 schließt sich in axialer Richtung an dem Gehäuse 5 ein Elektromagnet 3 an. Axiale Richtung bedeutet hierbei entweder die Symmetrieachse bzw. Längsachse 22 des Kolbens 2 oder aber auch die Bewegungsrichtung des Kolbens 2.

In dem Gehäuse 5 ist der Kolben 2 in axialer Richtung, insbesondere entlang seiner Längsachse 22, beweglich gelagert. Für die Bewegung des Kolbens 2 ist dabei ein Antrieb vorgesehen, insbesondere ist der Kolben 2 mit Druck, bevorzugt mit hydraulischem Druck beaufschlagbar, wobei die Kraftkomponente dieses Druckes gegen die Kraftrichtung einer Kolbenfeder 23 gerichtet ist. Dabei stützt sich die Kolbenfeder 23 einerseits an einem, an dem Gehäuseende 50 sich innen anschließenden Gehäuseabsatz bzw. Absatz 53 des Gehäuses 5 ab. Andererseits stützt sich die Kolbenfeder 23 an einem Flanschring 24 des Kolbens 2 ab. Dieser Flanschring 24 liegt im Innern, zentral im Gehäuse 5.

Der Kolben 2 bewegt sich aufgrund des Druckes zwischen mehreren Positionen, in der hier gezeigten Variante sind zum Beispiel zwei Positionen vorgesehen. Die Lage des Kolbens 2 in den jeweiligen Positionen ist durch eine Rasteinheit 4, die mit Rastelementen 40 ausgestattet ist, festlegbar. Für die Betätigung der Rasteinheit 4, insbesondere für deren Rastelemente 40 dient der Elektromagnet 3 bzw. dienen dessen Elemente.

Der Elektromagnet 3 besitzt einen Spulenkörper 32, der eine Wicklung 33 trägt. Diese weist einen von elektrischem Strom durchfließbaren Draht auf. Die Wicklung 33 wird radial außen (bezogen auf die Längsachse 22) von einem Magnetgehäuse 34 abgeschlossen. Durch eine Bestromung der Wicklung 33 entsteht ein Magnetfeld.

Im Inneren des Spulenkörpers 32 ist ein Ankerraum 35 vorgesehen, wobei der Ankerraum 35 vorliegend ungefähr die Hälfte des Innenraums des Spulenkörpers 32 ausfüllt. Der Ankerraum 35 ist dabei in Richtung des Kolbens 2 orientiert. Der übrige Bereich des Innenraums des Spulenkörpers 32 ist von einem Magnetkern 36 ausgefüllt, der, wie üblich, aus weichmagnetischem Material besteht, das die Magnetfeldlinien gut führt. In dem Ankerraum 35 befindet sich ein Anker 30, der in dem hier gezeigten Ausführungsbeispiel zylinderartig ausgebildet ist und eine Bodenfläche 37 aufweist. Zwischen der Bodenfläche 37 und einer dem Ankerraum 35 zugewandten Abschlussfläche 38 des Magnetkerns 36 bildet sich ein Luftspalt 39 aus.

Wenn die Wicklung 33 nicht bestromt wird, drückt eine Magnetfeder 300 den Anker 30 nach rechts, so dass der Luftspalt 39 seine maximale Ausdehnung hat. Wird die Wicklung 33 bestromt, so erzeugt sie ein Magnetfeld, welches den Anker 30 gegen die Kraft der Magnetfeder 300 nach links drückt, so dass der Luftspalt 39 geschlossen wird.

Der Anker 30 trägt eine Ankerstange 31. Die Ankerstange 31 ist dabei konzentrisch zum Anker 30 orientiert, Anker 30 und Ankerstange 31 sind in axialer Richtung, also parallel zur Längsachse 22, im Ankerraum 35 beweglich gelagert. Die Konstruktion ist hierbei so gewählt, dass der Anker 30 eine axiale Bohrung 301 aufweist, die die Ankerstange 31 aufnimmt. Die Ankerstange 31 steht dabei beidseitig des Ankers 30 über diesen hervor.

In dem Magnetkern 36 ist ebenfalls eine axiale Bohrung 302 vorgesehen. Die Anordnung ist so gewählt, dass sich in dieser axialen Bohrung 302 eine Lagerung für die Ankerstange 31 befindet.

Der Ankerraum 35 wird auf der einen Seite von dem Magnetkern 36 begrenzt, wobei der Magnetkern 36, wie bereits beschrieben, den dem Kolben 2 abgewandten Teil des Innenraums des Spulenkörpers 32 ausfüllt und so auch das axiale Ende des Elektromagneten 3, aber auch der Verriegelungseinheit 1, zusammen mit dem Magnetgehäuse 34, beschreibt. Auf der anderen Seite, dem Kolben 2 zugewandt, wird der Ankerraum 35 begrenzt von einem Jochteil 41, das topfartig gestaltet ist und bevorzugt aus weichmagnetischem Material gebildet ist, um die Magnetfeldlinien gut zu führen. Dabei taucht ein Teil des Ankers 30 in das topfartig gestaltete Jochteil 41 ein.

Das Jochteil 41 ist dabei ein Teil der Rasteinheit 4. Das Jochteil 41 besitzt eine Durchdringungsbohrung 47, die die Ankerstange 31 aufnimmt und gegebenenfalls auch lagert.

Die Rasteinheit 4 ist, im Schnitt gesehen, im Wesentlichen H-förmig. Der radial orientierte Steg des H bildet dabei das Jochteil 41. Daran schließen sich ein erster axialer Abschnitt 48 und ein zweiter axialer Abschnitt 49 an. Die beiden sich beidseits des Stegs hier anschließenden, axialen Abschnitte 48, 49 des H sind unterschiedlich groß bzw. unterschiedlich lang, wobei der dem Ankerraum 35 zugewandte Abschnitt 49 axial deutlich kürzer ist wie der dem Kolben 2 zugewandte Abschnitt 48. Der größere Abschnitt 48 ist dabei vorliegend bzw. in typischen Ausführungen ca. 2 bis 3, 3,5 oder 4 mal größer bzw. länger als der kleinere Abschnitt 49.

Im dem dem Jochteil 41 zugewandten Fußbereich des hülsenartigen ersten axialen Abschnittes 48 ist eine radial verlaufende (bezogen auf die Längsachse 22) Ausgleichsöffnung 405 angeordnet. Diese Ausgleichsöffnung 405 verbindet einen Innenraum 42 mit einem Außenraum 406 fluidisch, in welchem sich ein Kolbendruckstück 26 des Kolbens 2 axial bewegt. Durch die Ausgleichsöffnung 405 ist ein Druckausgleich zwischen dem Innenraum 42 und dem Außenraum 406 möglich.

Die beiden Abschnitte 48, 49 schließen radial je einen entsprechenden Aufnahmeraum ab. Dabei begrenzt der kleinere zweite Abschnitt 49 den Ankerraum 35 (dies ist das topfartige Jochteil 41) und der größere Abschnitt 48 den Innenraum 42. Dabei erstreckt sich der Innenraum 42 in axialer Richtung. In dem Innenraum 42 ist auch die Magnetfeder 300 vorgesehen, die sich einerseits auf der dem zweiten Abschnitt 49 zugewandten Oberseite des Jochteiles 41 und andererseits an einem Steuerelement 43, welches endseitig auf der Ankerstange 31 angeordnet ist, abstützt. Das Steuerelement 43 ist dabei positionsfest auf der Ankerstange 31 angeordnet.

Auch das Steuerelement 43 besitzt eine Aufnahmebohrung 401, in die die Ankerstange 31 eingesetzt ist. Das Steuerelement 43 ist in geeigneter Weise mit der Ankerstange 31 verpresst und so positionsgenau auf dieser gehalten. Das Steuerelement 43 besteht im Wesentlichen aus zwei verschiedenen geometrischen Körpern, einem Zylinderabschnitt und einem Konusabschnitt, wobei der Konusabschnitt an seiner Mantelfläche eine Konusfläche 400 ausbildet. Eine Mantelfläche 403 des Zylinderabschnitts des Steuerelementes 43 ist auf einer den Innenraum 42 radial begrenzenden Innenraumwand 402 geführt, gegebenenfalls auch gelagert. An dem dem Elektromagneten 3 zugewandten axialen Ende des Steuerelementes 43 befindet sich eine ringförmige Aussparung 404, in welchem das Ende der Magnetfeder 300 einsteht und so zuverlässig geführt und gehalten ist. Die Konusfläche 400 befindet sich an dem der Aussparung 404 gegenüberliegenden Ende des Steuerelementes 43.

Es ist klar, dass für die Ausgestaltung des Steuerelementes 43 auch andere Konstruktionen möglich sind. So ist zum Beispiel auch vorstellbar, dass die Konusfläche am Steuerelement auf der dem Elektromagneten 3 zugewandten Seite angeordnet ist und dann gegebenenfalls die Funktionsweise der Verriegelungseinheit 1 geändert ist. Die in Figur 1a gezeigte Variante ist so geplant, dass bei stromlosen Elektromagneten, also bei stromloser Wicklung 33, das Steuerelement die vorliegend als Kugeln ausgebildeten Rastelemente 40 radial nach außen drängt und so den Kolben 2 blockiert. Eine Blockierung der Bewegung des Kolbens 2 kann aber auch bei Bestromung des Elektromagneten 3 erfolgen.

Die Lage des Luftspaltes 39 ist dabei auch gemäß dem Vorschlag variabel. In dem in Figur 1a gezeigten Ausführungsbeispiel befindet sich der Luftspalt 39 auf der der Rasteinheit 4 abgewandten Seite des Ankers 30, also zwischen Anker 30 und dem Magnetkern 36. Alternativ hierzu ist es auch möglich, dass der Luftspalt dann zwischen dem Anker 30 und dem Jochteil 41, also der der Rasteinheit 4 zugewandten Seite des Ankers 30 ausgebildet ist.

Die Anordnung der Magnetfeder 300 in dem Innenraum 42 ist vorteilhaft, da damit diese Elemente nicht den magnetischen Kreis, der in den Elementen um den Ankerraum 35 herum ausgebildet ist, beeinträchtigen.

Alternativ ist auch eine Anordnung der Magnetfeder im Ankerraum oder auch außerhalb der Rasteinheit 4 möglich, um einen entsprechenden Kraftspeicher auszubilden.

Bei einer Bestromung der Wicklung 33 schließt sich der Luftspalt 39, indem der Anker 30 nach links versetzt wird, wodurch auch die Ankerstange 31 und das von der Ankerstange 31 getragene Steuerelement 43 nach links versetzt werden, wodurch die Magnetfeder 300 komprimiert wird und so einen Kraftspeicher für eine Rückstellbewegung der Einheit Anker 30 - Ankerstange 31 - Steuerelement 43 bei Ausschalten der Bestromung der Wicklung 33 bildet.

Der größere erste Abschnitt 48 der Rasteinheit 4 trägt an seinem dem Jochteil 41 abgewandten Ende bzw. Endbereich 44 das oder die Rastelemente 40, welche vorliegend als Kugeln ausgebildet sind. Dabei ist der größere Abschnitt 48 (zumindest im Endbereich 44) hülsen- oder zylinderartig gebildet. Die Rastelemente 40 sind als Kugeln 40 in einem Kugelkäfig vorgesehen. Der hülsen- oder zylinderartige Endbereich 44 des Abschnittes 48 besitzt dabei radial (bezogen auf die Längsachse 22) orientierte Bohrungen 45 zur Aufnahme der Rastelemente 40 bzw. Kugeln.

Je nach axialer Stellung des Steuerelementes 43 ist es möglich, dass die Rastelemente 40 bzw. Kugeln 40 radial nach innen ausweichen können oder nicht.

In dem in Figur 1a gezeigten Ausführungsbeispiel besteht der Kolben 2 aus zwei Einzelteilen. Der Kolben 2 umfasst ein aus der Öffnung 51 teilweise hervorstehendes Kolbenrohr 25, und ein, von diesem getrennt hergestelltes Kolbendruckstück 26. Die Anordnung ist dabei so gewählt, dass das Kolbendruckstück 26 sich im Gehäuse 5 an dem innenliegenden Ende des Kolbenrohres 25 anschließt.

Das Kolbenrohr 25 ist innen vollständig hohl. Bevorzugt ist dieses als Tiefziehteil, zum Beispiel aus Metall wie zum Beispiel Werkzeugstahl oder ähnlichem, gebildet, wodurch sich die Herstellung eines solchen Elementes erheblich verbilligt. Die Wandstärke des Kolbenrohres 25 beträgt daher vorliegend auch nur ca. 5 bis ca. 15 Prozent des Durchmessers des Kolbenrohres 25, oder des Außendurchmessers einzelner Teile (z.B. inneres Ende 27, erstes Rohrmittelstück 29, zweites Rohrmittelstück 202 und Verbindungbereich 203) des Kolbenrohres 25.

Das Kolbenrohr 25 liegt mit seinem endseitig vorgesehenen Flanschring 24 an dem Kolbendruckstück 26 an. Der Flanschring 24 bildet somit eine radial orientierte (bezogen auf die Längsachse 22) Begrenzungsfläche des Kolbenrohres 25. Dieses innere Ende 27, welches auch den Flanschring 24 umfasst, wird auf den Verbindungsring 28, der das Kolbendruckstück 26 in Richtung des Kolbenrohrs 25 abschließt, aufgesteckt. Es kann hier eine relativ genaue Passung vorgesehen werden, und zum Beispiel das Kolbenrohr 25 so auf das Kolbendruckstück 26 aufgepresst werden. Natürlich sind auch andere Verbindungsverfahren wie zum Beispiel Verschweißen, Verlöten oder auch Verkleben der Elemente Kolbenrohr 25 und Kolbendruckstück 26 alternativ möglich.

Das Ende 27 geht dann in einer Verjüngung 200 in ein erstes Rohrmittelstück 29 über, d.h. der Durchmesser des Kolbenrohres 25 im Bereich des ersten Rohrmittelstückes 29 ist geringer wie im Bereich des Endes 27. Das erste Rohrmittelstück 29 schließt dann an einer weiteren, als Absatz ausgebildeten zweiten Verjüngung 201 an das zweite Rohrmittelstück 202 an. Der Durchmesser des Kolbenrohres 25 im Bereich des zweiten Rohrmittelstückes 202 ist geringer wie im Bereich des ersten Rohrmittelstückes 29. Diese zweite Verjüngung 201 bildet einen Anschlag aus.

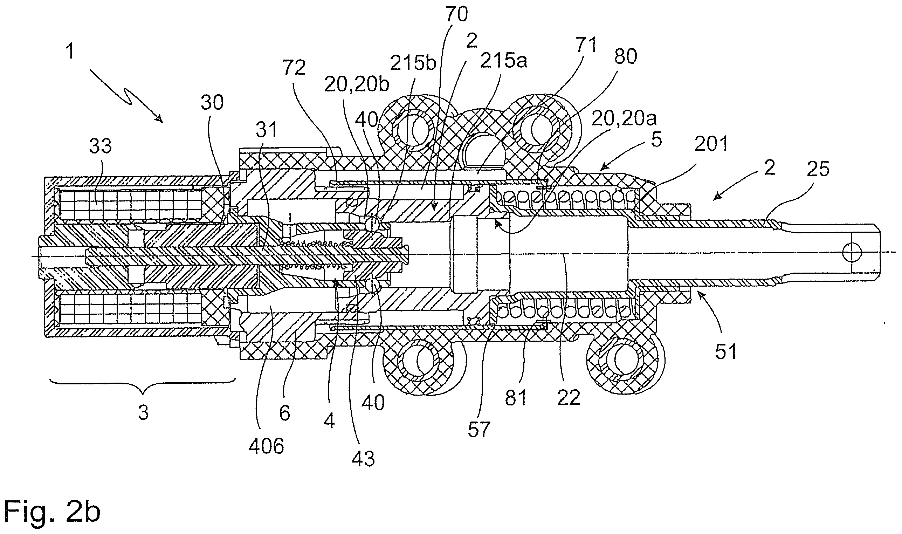

Der Kolben 2 ist in einem Gleitlager 54 geführt. Dieses weist einen Innenflansch 55 auf. Wird der Kolben 2 nach rechts verschoben, so wird die Bewegung dadurch begrenzt, dass die schulterartige Verjüngung 201 auf dem radial wirkenden Innenflansch 55 des Gleitlagers 54 anliegt. Ein solcher Zustand ist beispielsweise in Fig. 2b dargestellt.

Auf der Innenseite der Öffnung 51 des Gehäuses 5 ist das eben erwähnte Gleitlager 54 für das Kolbenrohr 25 vorgesehen. Das zweite Rohrmittelstück 202 ist auf diesem Gleitlager 54 gelagert. Das Gleitlager 54 besitzt einen, ins Gehäuseinnere orientierten Innenflansch 55 der auch den Absatz 53 in diesem Bereich ausbildet. Da das Gehäuse 5 vorzugsweise aus Kunststoff besteht wird dieses Teil entsprechend überspritzt. Es ist aber auch möglich, dass das Gleitlager 54 in ein separat hergestelltes, beispielsweise gespritztes, Gehäuse 5 wie beispielsweise ein Kunststoffgehäuse eingesetzt wird. Vorzugsweise ist hier, also im Bereich der Öffnung 51 und der Einbettung des Gleitlagers 54 in das Gehäuse 5 eine relativ hohe Genauigkeit günstig.

In der hier gezeigten Stellung der Verriegelungseinheit 1 ist der Kolben 2 ganz in das Gehäuse 5 eingeschoben und es steht nur der endseitige Verbindungsbereich 203 des Kolbens 2 aus dem Gehäuse 5 hervor. Weitere, hier nicht gezeigte Elemente, die von dem Kolben 2 bewegt oder gehalten werden, werden im Verbindungsbereich 203 mit dem Kolben 2 verbunden. Dabei geht das zweite Rohrmittelstück 202 in der dritten Verjüngung 204 in den Verbindungsbereich 203 über.

Wie bereits ausgeführt sind alle axialen Abschnitte, also das innere Ende 27, die erste Verjüngung 200, das erste Rohrmittelstück 29, die zweite Verjüngung 201, das zweite Rohrmittelstück 202, die dritte Verjüngung 204 und der Verbindungbereich 203 innen hohl.

Zu beachten ist, dass der Verbindungsbereich 203 eine an der Mittelebene vorgesehenen Ausnehmung aufweist, also geschlitzt ist. Es bildet sich eine gabelartige Struktur des Verbindungsbereiches 203 aus, wobei verbleibende Halbschalen 211 des Verbindungsbereiches 203 gleichwohl eine ausreichende Stabilität für die Verbindung mit einem nicht weiter dargestellten weiteren Element zur Verfügung stellen. Zur Aufnahme eines Befestigungsbolzens oder Ähnliches sind in der Halbschale 211 je eine Bohrung oder sonstige Durchdringungsöffnung 210 vorgesehen.

Das Kolbendruckstück 26 ist ebenfalls im Wesentlichen hülsenartig, also innen hohl gebildet. Zur Führung dient seine Außenfläche 205. Am vorderen, dem Kolbenrohr 25 zugewandten Ende ist an dem Kolbendruckstück 26 ein Außenring 206 vorgesehen. Dessen Außenfläche ist auf einer Gehäuseinnenwand 56 gelagert, zumindest aber geführt. Der Außenring 206 liegt in axialer Richtung (bezogen auf die Längsachse 22) an dem Flanschring 24 des Kolbenrohres 25 an. Eine dem Flanschring 24 abgewandte Druckseite 207 des Außenrings 206 wird mit Druck, bevorzugt mit hydraulischem Druck beaufschlagt und ist daher auch entsprechend massiv ausgebildet. Es ist hier ein ringförmiger Druckraum 70 vorgesehen.

Bevorzugt ist daher das Kolbendruckstück 26 als Drehteil realisiert. Es besteht bevorzugt aus Werkzeugstahl. Radial außen ist an der Druckseite 207 ein umlaufender Absatz 208 vorgesehen, der eine O-Ringdichtung bzw. einen Dichtring 209 aufnimmt. Da diese O-Ringdichtung bzw. der Dichtring 209 dem hydraulischen Druck ausgesetzt ist wird diese auch in radialer Richtung gepresst und verschließt so zuverlässig einen vielleicht noch verbleibenden Spalt zwischen der radialen Außenfläche des Außenringes 206 und der Gehäuseinnenwand 56.

Des Weiteren ist ein Mittelstück 6 vorgesehen. Das Mittelstück 6 ist ebenfalls hülsenartig ausgebildet und bildet an seiner Innenseite eine Lagerfläche 60 für das Kolbendruckstück 26 aus. Die Lagerfläche 60 wirkt dabei zusammen mit der Mantelfläche bzw. Außenfläche 205 des Kolbendruckstückes 26. Das Mittelstück 6 ist in der Verriegelungseinheit 1 ortsfest. Beispielsweise ist das Mittelstück 6 als Drehteil vorgesehen und besteht bevorzugt aus einem üblichen Werkzeugstahl. In einer weiteren bevorzugten Ausgestaltung ist vorgesehen, dass das Mittelstück 6 als ein Sinterformteil ausgebildet ist oder in einem formativen Verfahren gefertigt ist, insbesondere mittels 3D-Druckens, Metallpulverspritzgießens, selektiven Laserschmelzens oder selektiven Lasersinterns. Sintern oder formatives Fertigen sind kostengünstige Herstellungsverfahren, mit welchen sich zudem nahezu beliebig ausgeformte Werkstücke in einem einzigen Arbeitsgang herstellen lassen.

Das Mittelstück 6 besitzt in Abhängigkeit von anderen Bauteilen der vorgeschlagenen Verriegelungseinheit 1 eine axiale Länge (bezogen auf die Längsachse 26).

Die axiale Länge des Mittelstückes 6 entspricht vorliegend ca. 100-200 %, bevorzugt ca. 130-170 % des Hubs des Kolbens 2.

Die axiale Länge des Mittelstückes 6 entspricht vorliegend ca. 20-50 %, bevorzugt ca. 30-40 % der axialen Länge des Kolbens 2.

Die axiale Länge des Mittelstückes 6 entspricht vorliegend ca. 10-30 %, bevorzugt ca. 13-20 % der axialen Länge der Verriegelungseinheit 1.

Die Außenfläche 205 ist dabei die Mantelfläche eines Zylinders. Die Außenfläche 205 trägt an ihrem dem Kolbenrohr 25 abgewandten und dem Elektromagneten 3 zugewandten Ende in einer Umfangsnut 212 eine weitere O-Ringdichtung 213. Diese O-Ringdichtung 213 dichtet den zwischen der Außenfläche 205 und der Lagerfläche 60 verbleibenden Spalt, der unter Druck steht, in Richtung zum Elektromagneten 3 ab.

Der in Figur 1a gezeigte Kolben 2 besteht aus den beiden Bauteilen, dem Kolbenrohr 25 und dem Kolbendruckstück 26, die in der hier gezeigten Variante miteinander mechanisch fest verbunden, weil zum Beispiel aufgesteckt oder verpresst sind. Sie können alternativ aber auch fliegend zueinander ausgeführt sein d.h. nur aufgrund der Kraftwirkung des angelegten Druckes einerseits und der dagegen gerichteten Kraft der Kolbenfeder 23 andererseits aneinandergedrückt.

Dieser aus zwei Bauteilen bestehende Kolben 2 ist zunächst durch das Kolbendruckstück 26 auf der Lagerfläche 60 des Mittelstückes 6 gelagert. Eine weitere Lagerung ist alternativ an dem Außenring 206 des Kolbendruckstücks 26 im Zusammenspiel mit der Gehäuseinnenwand 56 vorgesehen. Schlussendlich ist das zweite Rohrmittelstück 202 des Kolbenrohres 25 an dem einseitig vorgesehenen Gleitlager 54 gelagert.

Auch eine Innenfläche 214 des Kolbendruckstückes 26 ist nicht glatt sondern besitzt jeweils endseitig, also zueinander axial (bezogen auf die Längsachse 22) beabstandete Ausbuchtungen oder Rastaufnahmen 20, 20a, 20b. Der Durchmesser der ringartigen Ausbuchtungen oder Rastaufnahmen 20, 20a, 20b ist dabei größer als der Durchmesser der zwischen ihnen liegenden Innenfläche 214.

Die Rastaufnahmen 20, 20a, 20b sind in die Innenfläche 214 des hülsenartigen Kolbendruckstückes 26 als Absatz oder innenliegende Schulter eingedreht. Die Rasteinheit 4 ist in dem Gehäuse 5 ortsfest angeordnet, der Kolben 2 ist gegenüber der Rasteinheit 4 axial bzw. längsbeweglich ausgeführt. In der in Figur 1a gezeigten Stellung ist allerdings die Bewegung des Kolbens 2 nach rechts, in Richtung der Öffnung 51, durch die Rasteinheit 4 blockiert, die Verriegelungseinheit 1 ist in der eingezogenen Position des Kolbens 2 blockiert.

Wie bereits erwähnt besitzt die Rasteinheit 4 je in Bohrungen 45 radial (bezüglich der Längsachse 22) beweglich gelagerte Rastelemente 40, hier zum Beispiel Kugeln 40 eines Kugelkäfigs. Der Elektromagnet 3 ist in einer abgefallenen Position gezeigt, das heißt, die Wicklung 33 ist nicht mit Strom beaufschlagt. Daher bildet sich zwischen dem Anker 30 und dem Magnetkern 36 der Luftspalt 39 aus, da die Magnetfeder 300 den Anker 30 nach rechts versetzt und somit auch das Steuerelement 43, an dem sich die Magnetfelder 300 ja abstützt. Somit gelangt das Steuerelement 43 derart an die axiale Position der Rastelemente/Kugeln 40, so dass die Konusfläche 400 des Steuerelementes 43 auf die Rastelemente/Kugeln 40 wirket und diese radial (bezogen auf die Längsachse 22) nach außen, in die jeweiligen Rastaufnahmen 20,20a schiebt. Dann allerdings ist eine Längsbewegung des Kolbens 2, also eine Bewegung des Kolbens 2 nach rechts blockiert, da eine erste Innenschulter 215a, die die Rastaufnahme 20, 20a begrenzt, an den radial nach außen versetzten Rastelementen 40 anliegt. Die erste Innenschulter 215a befindet sich dabei an der ersten Rastaufnahme 20a an der, der zweiten Rastaufnahme 20b zugewandten Seite.

In der in Figur 1a gezeigten Stellung liegt des weiteren das dem Kolbenrohr 25 abgewandte Ende des Kolbendruckstückes 26 an einer radial verlaufenden Anschlagfläche 61 des Mittelstückes 6 an und blockiert so auch eine Bewegung des Kolbens 2 nach links, in Richtung des Elektromagneten 3.

Der Vollständigkeit halber sei an dieser Stelle auch auf die Figur 2b verwiesen, in welcher die Stellung gezeigt ist, bei welcher der Kolben 2 vollständig aus dem Gehäuse 5 nach rechts ausgefahren ist. Diese Endstellung wird einerseits begrenzt durch das Anliegen der zweiten Verjüngung 201 an dem Innenflansch 55 des Gleitlagers 54 im Bereich der Öffnung 51 des Gehäuses 5. In dieser Stellung ist wiederum der Elektromagnet 3 abgeschaltet, also die Wicklung 33 nicht mit Strom beaufschlagt, wodurch das Steuerelement 43 die Rastelemente/Kugeln 40 in die äußere bzw. zweite Rastaufnahme 20,20b des Kolbendruckstückes 26 schiebt und so andererseits eine Bewegung nach links blockiert. Es liegen dann die radial herausgeschobenen Rastelemente/Kugeln 40 an einer zweiten Innenschulter 215b an, die die zweite Rastaufnahme 20b begrenzt. Die zweite Innenschulter 215b befindet sich dabei an der der ersten Rastaufnahme 20a zugewandten Seite der zweiten Rastaufnahme 20b. Wie bereits beschrieben sind die beiden Rastaufnahmen 20a und 20b axial (bezogen auf die Längsachse 22) zueinander beabstandet.

Der Kolben 2, insbesondere das Kolbendruckstück 26 ist beweglich gelagert zwischen der radial innen angeordneten Rasteinheit 4 und dem radial außen angeordneten Mittelstück 6. Das Mittelstück 6 nimmt in der Verriegelungseinheit 1 in der gezeigten Ausführung eine zentrale Position ein. Es trägt einerseits an seiner radialen Außenseite 62 das hülsenartige Gehäuse 5. Es stellt andererseits aber auch eine Verbindung mit dem Elektromagneten 3, insbesondere mit dessen Magnetgehäuse 34 her.

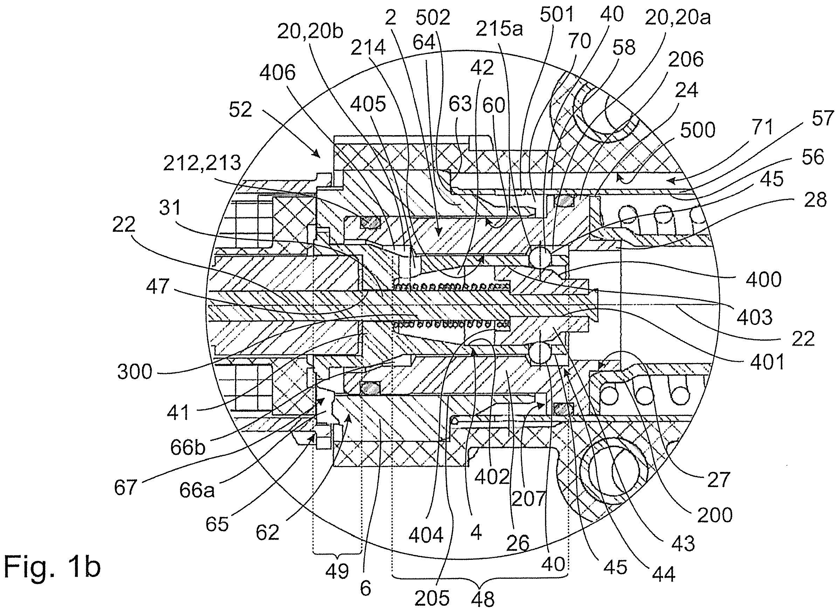

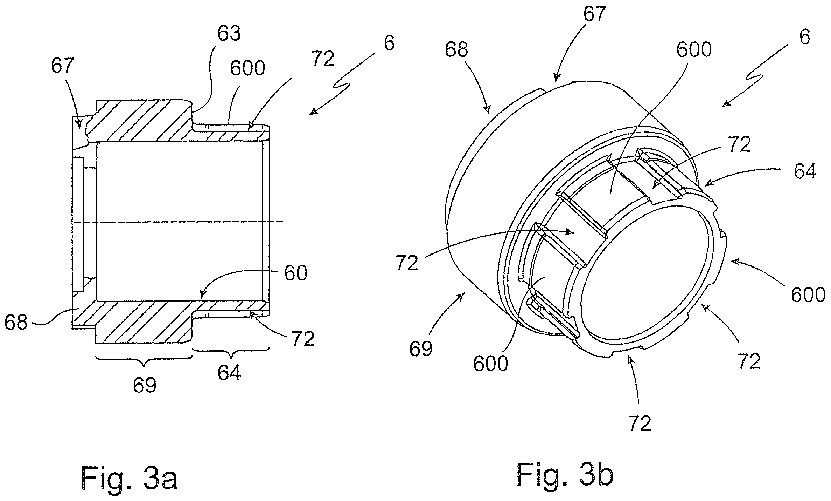

In Figur 1b ist im unteren Bereich ein radial verlaufender Spalt 65 zwischen dem Magnetgehäuse 34 und dem Gehäuse 5 erkennbar, der sich radial innen in einen Kanal 66a erstreckt, der im fluidischen Kontakt mit einem Zwischenraum 66b steht, der sich zwischen dem Druckstück 26 und der Rasteinheit 4 ergibt. Der radial verlaufende Kanal 66a wird dabei so realisiert, dass an einem dem Elektromagneten 3 zugewandten Fußbereich 68 (siehe Fig. 3a und 3b) des Mittelstückes 6 eine Aussparung 67 (siehe Fig. 3a und 3b) vorgesehen ist und so der dem Elektromagneten 3 zugewandte Fußbereich 68 des Mittelstückes 6 nicht am ganzen Umfang an dem Flanschteil des Spulenkörpers 32 anliegt. Die fluidisch zusammenhängenden Elemente Zwischenraum 66b, Kanal 66a und Spalt 65 erlauben eine Entlüftung des Inneren der Verriegelungseinheit 1.

Des Weiteren leistet das Mittelstück 6 eine radiale Ausrichtung des Elektromagneten 3 zur Rasteinheit 4. In diesem Bereich ist es günstig, eine hohe Konzentrizität zu realisieren.

Das Mittelstück 6 besitzt an seiner dem Elektromagneten 3 abgewandten, bzw. dem Kolbenrohr 25 zugewandten Seite eine umlaufende Anlageschulter 63, an dem sich dann ein ring- und/oder konusartiger Verbindungsbereich 64 anschließt. Dieser Verbindungsbereich 64 ist Bestandteil des Mittelstücks 6. Der erfindungsgemäße Vorschlag ist für die Ausgestaltung des Verbindungsbereiches 64 sehr variabel. Dabei hat der Verbindungsbereich 64 mehrere Aufgaben.

Zunächst stützt dieser ein Rohrstück 57 ab, welches auch als Hülsenstück bezeichnet werden kann, das Teil des Gehäuses 5 ist und auf seiner Innenseite die Gehäuseinnenwand 56 zur Verfügung stellt. Des Weiteren begrenzt zumindest ein Teil des Verbindungsbereiches 64 den Druckraum 70, ist also in Kontakt mit dem mit Druck beaufschlagbaren Medium. Hierzu ist das Rohrstück 57 auf den vorzugsweise ringartigen Bereich des Verbindungsbereiches 64 aufgeschoben oder aufgepresst. Wie bereits beschrieben, liegt der Kolben 2, insbesondere das Kolbendruckstück 26 an der Gehäuseinnenwand 56 an, insofern hat das Rohrstück 57 die Eigenschaften eines Zylinders. Bevorzugt begrenzt bzw. leitet das Rohrstück 57 den Druck nicht nur auf seiner Gehäuseinnenwand 56, sondern auch auf seiner Rohraußenseite 58.

Die Lagerung des ersten Endstückes des Rohrstückes 57 auf dem Mittelstück 6 unterstreicht die zentrale Bedeutung des Mittelstückes 6 in der hier gezeigten Ausführung. Das zweite Endstück des Rohrstückes 57 ist im Gehäuse 5 gelagert und die Innenseite des Rohrstückes 57 dient als Lagerung bzw. Führung des Kolbens 2.

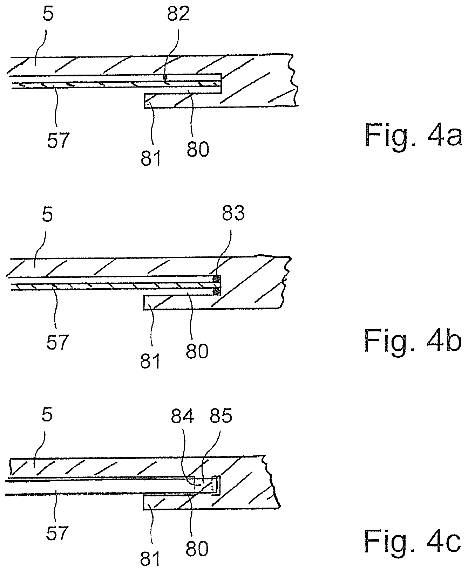

Das Rohrstück 57 ist in der vorliegenden Ausführung rechtsseitig fluiddicht mit dem Gehäuse 5 verbunden. Dies wird dadurch bewirkt, dass das Rohrstück 57 in eine Nut 80 des Gehäuses 5 eingeschoben wird. Die Nut 80 ist dabei ringförmig ausgebildet und radial innenseitig von einem Vorsprung 81 des Gehäuses 5 begrenzt. Durch die fluiddicht ausgeführte Verbindung ist sichergestellt, dass unter Druck befindliches Fluid, welches sich im Druckleitungskanal 71 befindet, nicht an der Verbindungsstelle zwischen Gehäuse 5 und Rohrstück 57 in einen Bereich radial außenseitig zum Kolbenrohr 25 gelangt, was einer Bewegung des Kolbens 2 nach rechts, welche durch das unter Druck stehende Fluid wie nachfolgend beschrieben gerade erreicht werden soll, entgegenwirken würde. Mögliche Ausführungen einer dichten Verbindung sind in den Figuren 4a bis 4c dargestellt und werden weiter unten beschrieben.

An dem Gehäuse 5 befindet sich ein, in Figur 1a nicht weiter dargestellter Druckanschluss, der ein unter Druck stehendes Medium als Antrieb für den Kolben 2 zur Verfügung stellt. Vorzugsweise ist dieser Druckanschluss in der der Öffnung 51 zugewandten Hälfte des Gehäuses 5 angeordnet, insbesondere befindet er sich nahe, insbesondere sehr nahe an der Öffnung 51. Um nun einen möglichst großen Hub des Kolbens 2 zu realisieren muss die mit Druck beaufschlagbare Druckseite 207 des Kolbendruckstückes 26 in der eingezogenen Position des Kolbens 2 möglichst weit von der Öffnung 51 entfernt sein. Diese Randbedingung führt dazu, dass im Gehäuse 5, bzw. in der Verriegelungseinheit 1 das unter Druck stehende Medium zunächst entgegen der bevorzugten Bewegungsrichtung (der durch die Druckbeaufschlagung realisierten Arbeitsbewegung, in Figur 1a nach rechts) des Kolbens 2 geleitet werden muss, um dann an geeigneter Stelle umgelenkt und auf die Druckseite 207 geführt zu werden.

Der nicht gezeigte Druckanschluss steht daher in fluidischer Verbindung mit dem im Wesentlichen axial (bezogen auf die Längsachse 22) verlaufenden Druckleitungskanal 71. Dieser Druckleitungskanal 71 wird radial innen von der Außenseite 58 des Rohrstückes 57 und radial außen von dem Kunststoffgehäuse 5, insbesondere dessen Innenwand 500 begrenzt. Der Druckleitungskanal 71 kann das gesamte Rohrstück 57 (bezogen auf seine Umfangsrichtung) umfassen oder sich nur in einem Segment, wie in Figur 1a gezeigt, axial erstrecken.

Da das Rohrstück 57 gemäß einer Ausführung fest, und daher auch dicht bzw. druckdicht auf dem Verbindungsbereich 64 des Mittelstücks 6 aufgesteckt ist, ist auf der axialen Höhe, bezogen auf die Längsachse 22, des Verbindungsbereiches 64 in dem Rohrstück 57 eine Durchbrechung 501 vorgesehen durch die das unter Druck stehende Medium aus dem Druckleitungskanal 71 in den Druckraum 70 auf der Innenseite des Rohrstückes 57 gelangt.

Das Rohrstück 57 hat somit eine Mehrzahl von Aufgaben.

Seine Gehäuseinnenwand 56 dient als Führung bzw. Lagerung des Kolbens 2. Seine Außenseite 58 dient zumindest teilweise als Druckleitungskanal 71.

Des Weiteren stützt, bzw. steift das Rohrstück 57 das Gehäuse 5 aus, welches vorzugsweise aus Kunststoff besteht. Diese kombinierte Bauweise des Gehäuses 5 vereinigt geringe Masse und günstige Herstellung mit hoher Verschleißfestigkeit und daher mit hoher Verfügbarkeit einer so ausgestatteten Verriegelungseinheit.

Das Rohrstück 57 ist an seinem dem Verbindungsbereich 64 abgewandten Ende 59 ringartig von dem Kunststoffmaterial des Gehäuses 5 umgeben. Daher erstreckt sich der Druckleitungskanal 71 nicht zwingend über die gesamte axiale Länge des Rohrstückes 57. Beispielsweise kann das Rohrstück 57 von dem Kunststoff des Gehäuses 5 umspritzt werden, alternativ kann beispielsweise das Rohrstück 57 in ein, in einem separaten Fertigungsschritt hergestelltes Gehäuse 5 eingesteckt oder eingepresst werden.

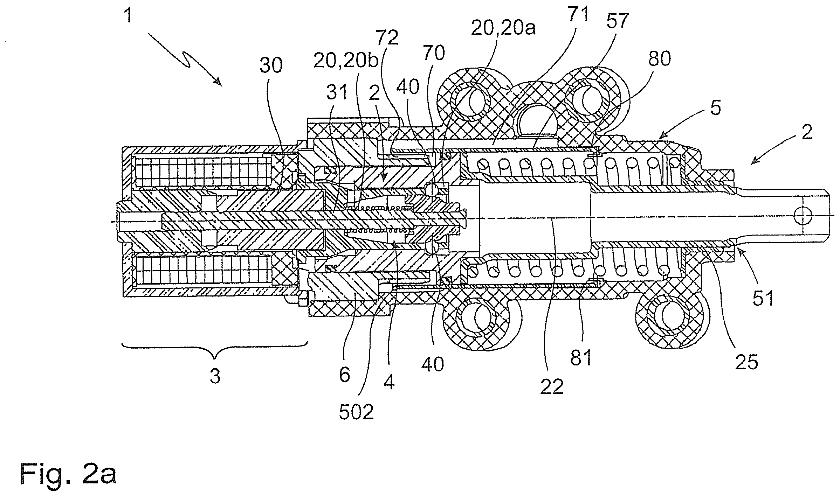

In den Figuren 3a, 3b ist ein Ausführungsbeispiel des Mittelstückes 6 gezeigt. Ein solch ausgestaltetes Mittelstück 6 findet sich auch in dem Anwendungsbeispiel nach Figur 2a bzw. 2b.

Das Mittelstück 6 ist hülsenartig gebildet. Es besitzt einen im Einbauzustand dem Elektromagneten 3 zugewandten Fußbereich 68, an dem sich ein Mittelabschnitt 69 anschließt. Auf der dem Fußbereich 68 abgewandten Seite wird das Mittelstück 6 von einem Verbindungsbereich 64 abgeschlossen. Der Mittelabschnitt 69 besitzt den größten Durchmesser und liegt im Einbauzustand direkt an dem Kunststoffmaterial des Gehäuses 5 an.

Der Durchmesser des Fußbereichs 68 ist geringer als der Durchmesser des Mittelabschnittes 69. Der Fußbereich 68 ist nicht vollständig als umlaufender Ring ausgestaltet, sondern besitzt in einem gewissen Winkelsegment eine Aussparung 67, die im Einbauzustand den Kanal 66a bildet. Der Mittelabschnitt 69 geht mit der radial verlaufenden Anlageschulter 63 in den Verbindungsbereich 64 über.

Auch der Außendurchmesser des Verbindungsbereiches 64 ist geringer als der Durchmesser des Mittelabschnittes 69. Auf den Verbindungsbereich 64 wird im Einbauzustand das Rohrstück 57 aufgesteckt. Hierzu sind im Verbindungsbereich 64 eine Vielzahl von Auflagesegmenten 600 vorgesehen, die auf der zylinderartigen Außenfläche des Verbindungsbereiches 64 als Mantelsegmente ausgebildet und jeweils durch Segmentzwischenräume 72 getrennt sind. Diese Segmentzwischenräume 72 sind als Ausnehmungen in der Mantelfläche des Verbindungsbereiches 64 gebildet und führen das Medium, in den Segmentzwischenräumen 72 herrscht also im Einbauzustand und im Betrieb der entsprechende Betriebsdruck. Die Segmentzwischenräume 72 sind daher Teil des mediumführenden Systems.

Das Ausführungsbeispiel des Mittelstückes 6 nach Figur 1a bzw. 1b unterscheidet sich hierzu wie folgt:
Wie bereits ausgeführt besteht zwischen dem Druckleitungskanal 71, der auf der radialen Außenseite des Rohrstückes 57 angeordnet ist und dem Druckraum 70, der auf der radialen Innenseite des Rohrstückes 57 angeordnet ist, eine fluidische Verbindung. In dem in den Figuren 1a und 1b gezeigten Beispiel wird diese Verbindung durch die Durchbrechung 501 in dem Rohrstück 57 realisiert. Das dem Mittelstück 6 zugewandte Ende 502 des Rohrstückes 57 ist dabei auf den Verbindungbereich 64 vollständig aufgeschoben und liegt satt (und damit auch abdichtend) an der radial nach außen verlaufenden Anlageschulter 63 an.

Die Figuren 2a und 2b zeigen die Verwendung des Mittelstückes 6 nach den Figuren 3a und 3b. Es ist gut zu erkennen, dass das dem Mittelstück 6 zugewandte Ende 502 axial beabstandet (bezogen auf die Längsachse 22) von der Anlageschulter 63 ist. Die in axialer Richtung (bezogen auf die Längsachse 22) sich erstreckenden Segmentzwischenräume 72 stehen damit fluidisch in Verbindung mit dem Druckleitungskanal 71 und auch dem Druckraum 70. Der axiale Abstand (bezogen auf die Längsachse 22) des Rohrendes 502 zu der Anlageschulter 63 entspricht hier der Durchbrechung 501, und bildet hier eine radiale Verbindung von der Innenseite des Rohrstückes 57 zur Außenseite des Rohrstückes 57. Diese Verbindung verläuft hierbei außerhalb des Rohrstückes 57, also axial nach außen versetzt, zum Rohrstückende 502.

In den Figuren 2a und 2b ist je in einem vertikalen Schnitt ein zweites Ausführungsbeispiel der erfindungsgemäßen Verriegelungseinheit 1 in zwei verschiedenen Stellungen des Kolbens gezeigt.

In Figur 2a ist der Kolben 2 in der Verriegelungseinheit 1 vollständig eingezogen und in diese Endlage durch die Rasteinheit 4 festgelegt. Die vollständig eingezogene Lage des Kolbens 2 resultiert daraus, dass auf dem Kolbendruckstück 26 kein oder nur ein kleiner Druck anliegt, der eine Kraft entwickelt, die kleiner ist als die ihr entgegengerichtete Federkraft der Kolbenfeder 23. In Figur 2b ist der Kolben 2 aus der Verriegelungseinheit 1 vollständig ausgeschoben und ebenfalls in diese Endlage durch die Rasteinheit 4 festgelegt.

Wie bereits ausgeführt wird die blockierende Stellung der Rasteinheit 4 im abgefallenen, d.h. nicht bestromten Zustand des Elektromagneten 3 realisiert, ohne aber die Erfindung hierauf festzulegen, die blockierende Stellung kann auch alternativ im bestromten Zustand des Elektromagneten realisiert sein.

Um zum Beispiel nun den Kolben 2 aus der in Figur 2a gezeigten Stellung in die in Figur 2b gezeigten Stellung zu bewegen kann wie folgt vorgegangen werden.
- Zunächst ist die Blockade der Rasteinheit 4 aufzuheben. Dies erfolgt dadurch, dass der Elektromagnet 3 bestromt wird und dadurch die Einheit von Anker 30, Ankerstange 31 und Steuerelement 43 axial versetzt wird und so eine radiale Beweglichkeit der Rasterelemente / Kugeln 40 erlaubt, die dann zum Beispiel nach radial innen zurückweichen können und so die axiale Bewegung (alles bezogen auf die Längsachse 22) des Kolbens 2, hier insbesondere des Kolbendruckstückes 26 ermöglichen.
- Im nächsten Schritt wird ein Antrieb des Kolbens 2, hier zum Beispiel eine hydraulische Druckbeaufschlagung, aktiviert und der auf dem Kolbendruckstück 26 anliegende Betriebsdruck drückt dann den Kolben 2, bestehend aus dem Kolbenrohr 25 und dem Kolbendruckstück 26, gegen die Kraft der Kolbenfeder 23 nach rechts, weg von dem Elektromagneten 3. Dadurch wird das Kolbenrohr 25 aus der Öffnung 51 herausgeschoben.
- Die so erreichte Endlage des Kolbens 2 wird dann wieder durch die Rasteinheit 4 gesichert, hierzu wird der Strom durch die Wicklung 33 des Elektromagneten 3 ausgeschaltet oder zumindest so stark reduziert, dass die hieraus resultierende Magnetkraft auf den Anker 30 geringer ist als die gegen die Magnetkraft wirkende Federkraft der Magnetfelder 300. Der abfallende Anker 30 versetzt das Steuerelement 43 axial derart, dass dessen Konusfläche 400 die Rasterelemente / Kugeln 40 radial nach außen in die Rastaufnahme 20 drückt und so ein Zurückweichen des Kolbens 2, zum Beispiel bei ausgeschaltetem Druck auf das Kolbendruckstück 26, verhindert.

Die Figuren 4a bis 4c zeigen jeweils einen Ausschnitt der Verbindungsstelle zwischen Rohrstück 57 und Gehäuse 5, wobei unterschiedliche Möglichkeiten der Befestigung und Abdichtung beschrieben werden.

Wie bereits weiter oben erwähnt ist das Rohrstück 57 in einer Nut 80 aufgenommen, welche ringförmig ausgebildet ist und radial innenseitig von einem Vorsprung 81 begrenzt wird.

Bei der Ausführung von Fig. 4a ist zwischen Gehäuse 5 und Rohrstück 57 eine Dichtung 82 in Form eines Dichtrings angeordnet. Dieser sorgt für eine fluiddichte Ausführung.

Bei der Ausführung von Fig. 4b ist seitlich zum Rohrstück 57 eine Dichtung 83 in Form von Dichtmaterial aus Silikon angeordnet, welches für die fluiddichte Ausführung sorgt. Auch eine Halterung des Rohrstücks 57 in der Nut 80 kann damit erreicht werden.

Bei der Ausführung von Fig. 4c sind in dem Rohrstück eine Anzahl von Bohrungen 84 ausgebildet, durch welche jeweils ein Eingriffsteil 85 des Gehäuses 5 durchgeht. Dies kann beispielsweise dadurch erfolgen, dass bei einer Fertigung das Gehäuse 5 um das Rohrstück 57 herum gespritzt wird. Das Eingriffsteil 85 kann somit insbesondere materialschlüssig mit dem Rest des Gehäuses 5 verbunden sein und somit für eine vorteilhafte Befestigung des Rohstücks 57 sorgen.

Alternativ ist auch klar, dass das Ende des Rohrstückes 57 auch ohne Anordnung von Bohrungen 84 umspritzt werden kann. Das Kunststoffmaterial des Gehäuses 5 kann dabei beispielsweise zumindest am Ende des Rohrstückes 57 an diesem innen (durch den Vorsprung 81) und außen anliegen.

## Patentansprüche

1. Verriegelungseinheit, insbesondere für die Parksperre eines Automatikgetriebes, für das Verriegeln der Bewegung eines von einem Antrieb bewegbaren, insbesondere mit Druck bzw. hydraulischen Druck beaufschlagbaren Kolbens (2), wobei die Verriegelungseinheit
(1) einen Elektromagneten (3) und mindestens ein Rastelement (40) aufweist und das Rastelement (40) mit dem Anker (30) beziehungsweise der Ankerstange (31) des Elektromagneten (3) zusammenwirkt und der Kolben (2) mindestens eine Rastaufnahme (20, 20a, 20b) aufweist und der Kolben (2) durch das haltende Zusammenwirken des Rastelementes (40) mit der Rastaufnahme (20, 20a, 20b) festlegbar ist, wobei die Verriegelungseinheit (1) ein innenliegendes Rohrstück (57) aufweist, welches als Führung des Kolbens
(2) ausgebildet ist, wobei außenseitig zu dem Rohrstück (57) ein Druckleitungskanal (71) ausgebildet ist, wobei der Druckleitungskanal (71) zumindest teilweise radial, bezogen auf die Längsachse (22) des Kolbens (2), innen von der Außenseite des Rohrstückes (57) und außen von der Innenwand des Gehäuses (5) begrenzt ist, **dadurch gekennzeichnet, dass** der Kolben (2) zumindest teilweise in einem, zumindest teilweise aus Kunststoff gebildeten Gehäuse (5) angeordnet ist, wobei das Rohrstück (57) aus Metall ausgebildet ist, wobei der Kolben (2) zumindest teilweise in einem, zumindest teilweise von dem Gehäuse (5) umgebenen Mittelstück (6) gelagert ist, wobei das Mittelstück (6) an seiner dem Elektromagneten (3) abgewandten und/oder einem Kolbenrohr (25) zugewandten Seite eine umlaufende Anlageschulter (63) aufweist, an welcher sich ein ring- und/oder konusartiger Verbindungsbereich (64) anschließt, wobei der Verbindungsbereich (64) das Rohrstück (57) trägt.

2. Verriegelungseinheit nach einem der vorhergehenden Ansprüche, **dadurch gekennzeichnet, dass** das Gehäuse (5) vollständig aus Kunststoff gebildet ist.

3. Verriegelungseinheit nach einem der vorhergehenden Ansprüche, **dadurch gekennzeichnet, dass** das Rohrstück (57) mit dem Gehäuse (5) verbunden ist oder Teil des Gehäuses (5) ist.

4. Verriegelungseinheit nach einem der vorhergehenden Ansprüche, **dadurch gekennzeichnet, dass** der Kolben (2) am Rohrstück (57) anliegt und/oder entlanggleitet und/oder fluiddicht am Rohrstück (57) anliegt.

5. Verriegelungseinheit nach einem der vorhergehenden Ansprüche, **dadurch gekennzeichnet, dass** der Kolben (2) ein Dichtmittel aufweist, welches den Kolben (2) am Rohrstück (57) fluiddicht abdichtet.

6. Verriegelungseinheit nach Anspruch 5, **dadurch gekennzeichnet, dass** das Dichtmittel ein Dichtring (209) oder ein O-Ring ist.

7. Verriegelungseinheit nach Anspruch 6, **dadurch gekennzeichnet, dass** der Dichtring (209) oder der O-Ring in einem umlaufenden Absatz (208) des Kolbens (2) vorgesehen ist; und/oder der Dichtring (209) oder der O-Ring in einem Kolbendruckstück (25) des Kolbens (2) vorgesehen ist.

8. Verriegelungseinheit nach einem der vorhergehenden Ansprüche, **dadurch gekennzeichnet, dass** das Rohrstück (57) innenseitig eine Gehäuseinnenwand (56) bildet, an welcher der Kolben (2) anliegt.

9. Verriegelungseinheit nach einem der vorhergehenden Ansprüche, **dadurch gekennzeichnet, dass** das Rohrstück (57) zumindest entlang eines Abschnitts, an welchem der Kolben (2) geführt wird, gerade und/oder zylinderförmig ausgebildet ist.

## Claims

1. Locking unit, in particular for the parking lock of an automatic transmission, for locking the movement of a piston (2) which is movable by a drive and in particular can be acted upon with pressure or hydraulic pressure, the locking unit (1) having a solenoid (3) and at least one latching element (40), and the latching element (40) interacting with the armature (30) or the armature rod (31) of the solenoid (3), and the piston (2) having at least one latching receptacle (20, 20a, 20b), and the piston (2) being securable by the retaining interaction of the latching element (40) with the latching receptacle (20, 20a, 20b), wherein the locking unit (1) has an internal tube section (57) which is designed as a guide of the piston (2), wherein a pressure conducting channel (71) is formed on the outer side of the tube section (57), wherein the pressure conducting channel (71) is limited at least partially radially, with respect to the longitudinal axis (22) of the piston (2), on the inside by the outer side of the tube section (57) and on the outside by the inner wall of the housing (5), **characterized in that** the piston (2) is at least partially arranged in a housing (5) which is at least partially formed from plastic, wherein the tube section (57) is formed from metal, wherein the piston (2) is at least partially mounted in a centre section (6) which is at least partially surrounded by the housing (5), wherein the centre section (6) has an encircling contact shoulder (63) on its side facing away from the solenoid (3) and/or facing a piston tube (25), which contact shoulder (63) is adjoined by an annular and/or conical connecting region (64), wherein the connecting region (64) supports the tube section (57).

2. Locking unit according to one of the preceding claims, **characterized in that** the housing (5) is completely formed from plastic.

3. Locking unit according to either of the preceding claims, **characterized in that** the tube section (57) is connected to the housing (5) or is part of the housing (5).

4. Locking unit according to one of the preceding claims, **characterized in that** the piston (2) lies against and/or slides along the tube section (57) and/or lies in a fluid-tight manner against the tube section (57).

5. Locking unit according to one of the preceding claims, **characterized in that** the piston (2) has a sealing means which seals the piston (2) on the tube section (57) in a fluid-tight manner.

6. Locking unit according to Claim 5, **characterized in that** the sealing means is a sealing ring (209) or an 0 ring.

7. Locking unit according to Claim 6, **characterized in that** the sealing ring (209) or the 0 ring is provided in an encircling step (208) of the piston (2); and/or the sealing ring (209) or the 0 ring is provided in a piston thrust piece (25) of the piston (2) .

8. Locking unit according to one of the preceding claims, **characterized in that** the inner side of the tube section (57) forms a housing inner wall (56) against which the piston (2) lies.

9. Locking unit according to one of the preceding claims, **characterized in that** the tube section (57) is of rectilinear and/or cylindrical design at least along a portion on which the piston (2) is guided.

## Revendications

1. Unité de verrouillage, notamment pour le blocage de stationnement d'une transmission automatique, pour le verrouillage du déplacement d'un piston (2) pouvant être déplacé par un entraînement, notamment pouvant être soumis à une pression ou à une pression hydraulique, l'unité de verrouillage (1) présentant un électroaimant (3) et au moins un élément d'encliquetage (40) et l'élément d'encliquetage (40) coopérant avec l'induit (30) ou la tige d'induit (31) de l'électroaimant (3) et le piston (2) présentant au moins un logement d'encliquetage (20, 20a, 20b) et le piston (2) pouvant être fixé par la coopération de maintien de l'élément d'encliquetage (40) avec le logement d'encliquetage (20, 20a, 20b), l'unité de verrouillage (1) présentant une pièce tubulaire (57) située à l'intérieur, qui est réalisée en tant que guide du piston (2), un canal de conduite de pression (71) étant réalisé sur le côté extérieur de la pièce tubulaire (57), le canal de conduite de pression (71) étant délimité au moins partiellement radialement, par rapport à l'axe longitudinal (22) du piston (2), à l'intérieur par le côté extérieur de la pièce tubulaire (57) et à l'extérieur par la paroi intérieure du boîtier (5), **caractérisée en ce que** le piston (2) est agencé au moins partiellement dans un boîtier (5) formé au moins partiellement de matière plastique, la pièce tubulaire (57) étant réalisée en métal, le piston (2) étant logé au moins partiellement dans une pièce centrale (6) entourée au moins partiellement par le boîtier (5), la pièce centrale (6) présentant, sur son côté détourné de l'électroaimant (3) et/ou tourné vers un tube de piston (25), un épaulement d'application (63) périphérique auquel se raccorde une zone de liaison (64) de type annulaire et/ou conique, la zone de liaison (64) portant la pièce tubulaire (57).

2. Unité de verrouillage selon l'une quelconque des revendications précédentes, **caractérisée en ce que** le boîtier (5) est entièrement formé de matière plastique.

3. Unité de verrouillage selon l'une quelconque des revendications précédentes, **caractérisée en ce que** la pièce tubulaire (57) est relié au boîtier (5) ou fait partie du boîtier (5).

4. Unité de verrouillage selon l'une quelconque des revendications précédentes, **caractérisée en ce que** le piston (2) s'applique contre la pièce tubulaire (57) et/ou glisse le long de celle-ci et/ou s'applique de manière étanche aux fluides contre la pièce tubulaire (57) .

5. Unité de verrouillage selon l'une quelconque des revendications précédentes, **caractérisée en ce que** le piston (2) présente un moyen d'étanchéité qui rend le piston (2) étanche aux fluides sur la pièce tubulaire (57) .

6. Unité de verrouillage selon la revendication 5, **caractérisée en ce que** le moyen d'étanchéité est une bague d'étanchéité (209) ou un joint torique.

7. Unité de verrouillage selon la revendication 6, **caractérisée en ce que** la bague d'étanchéité (209) ou le joint torique est prévu dans un épaulement périphérique (208) du piston (2) ; et/ou la bague d'étanchéité (209) ou le joint torique est prévu dans une pièce de pression de piston (25) du piston (2).

8. Unité de verrouillage selon l'une quelconque des revendications précédentes, **caractérisée en ce que** la pièce tubulaire (57) forme, sur le côté intérieur, une paroi intérieure de boîtier (56) contre laquelle le piston (2) s'applique.

9. Unité de verrouillage selon l'une quelconque des revendications précédentes, **caractérisée en ce que** la pièce tubulaire (57) est réalisée sous forme droite et/ou cylindrique au moins le long d'une section sur laquelle le piston (2) est guidé.
